# EUROPÄISCHE PATENTANMELDUNG

(11) **EP 4 715 227 A1**
(43) Veröffentlichungstag der Anmeldung: **25.03.2026**
(21) Anmeldenummer: 24202225.9
(22) Anmeldetag: 24.09.2024
(51) Int. Cl.: F16B 5/06, F16B 13/06, F16B 37/04, F16B 43/00

(54) **BEFESTIGUNGSVORRICHTUNG, MONTAGEEINHEIT, ANORDNUNG MIT EINER MONTAGEEINHEIT UND VERWENDUNG EINER BEFESTIGUNGSVORRICHTUNG ODER MONTAGEEINHEIT**

(60) Teilanmeldung: 25183320.8
(71) Anmelder: Ludwig Bertram GmbH, 30916 Isernhagen (DE)
(72) Erfinder:
(74) Vertreter: Torggler & Hofmann Patentanwälte - Innsbruck

(57) **Zusammenfassung**

Befestigungsvorrichtung (1) zur Befestigung eines Bauteils (2) an einem Körper (3) mit wenigstens einer Montageöffnung (4), wobei die Befestigungsvorrichtung (1)
- eine erste Baugruppe (5), welche dazu ausgebildet ist, zumindest bereichsweise in die wenigstens eine Montageöffnung (4) des Körpers (3) eingeführt zu werden, und
- eine zweite Baugruppe (6), welche dazu ausgebildet ist, an einer ersten Seite (7) des Bauteils (2) angelegt zu werden,
aufweist, wobei die erste Baugruppe (5) durch ein Zusammenwirken eines Befestigungsmittels (8) mit der ersten Baugruppe (5) und der zweiten Baugruppe (6) gegen eine Innenfläche (9) des Körpers (3) verspreizbar ist, wobei die erste Baugruppe (5) dazu ausgebildet ist, an einer der ersten Seite (7) gegenüberliegenden, zweiten Seite (10) des Bauteils (2) angelegt zu werden, wodurch die erste Baugruppe (5) und die zweite Baugruppe (6) zusammen zum Halten des Bauteils (2) ausgebildet sind.

## Beschreibung

Die vorliegende Erfindung betrifft in einem ersten Aspekt eine Befestigungsvorrichtung zur Befestigung eines Bauteils an einem Körper mit wenigstens einer Montageöffnung, wobei die Befestigungsvorrichtung
- eine erste Baugruppe, welche dazu ausgebildet ist, zumindest bereichsweise in die wenigstens eine Montageöffnung des Körpers eingeführt zu werden, und
- eine zweite Baugruppe, welche dazu ausgebildet ist, an einer ersten Seite des Bauteils angelegt zu werden,
aufweist, wobei die erste Baugruppe durch ein Zusammenwirken eines Befestigungsmittels mit der ersten Baugruppe und der zweiten Baugruppe gegen eine Innenfläche des Körpers verspreizbar ist.

In einem zweiten Aspekt betrifft die Erfindung eine Befestigungsvorrichtung zur Befestigung eines Bauteils an einem Körper mit wenigstens einer Montageöffnung, wobei die Befestigungsvorrichtung einen Dübel mit wenigstens, vorzugsweise genau, zwei Spreizarmen und eine Hülse mit wenigstens einem abstehenden Fortsatz aufweist.

Des Weiteren betrifft die Erfindung eine Montageeinheit mit einer Befestigungsvorrichtung und einem Bauteil, eine Anordnung mit einer Montageeinheit und die Verwendung einer Befestigungsvorrichtung oder einer Montageeinheit.

Derartige Befestigungsvorrichtungen werden grundsätzlich dazu eingesetzt, Bauteile an Körpern zu befestigen, an welchen der Zugang nur von einer Seite gegeben ist. Dabei soll das zu befestigende Bauteil mittels der Befestigungsvorrichtung am Körper fixiert werden, indem sich die Befestigungsvorrichtung innerhalb einer Montageöffnung und/oder an einer Innenfläche des Körpers verspreizt, ohne dass ein Gegenstück an einer gegenüberliegenden Seite des Körpers, wie z.B. eine Kontermutter, eingesetzt werden muss. Ein klassisches Beispiel einer solchen Anwendung ist die Montage eines Toilettensitzes und/oder einer Toilettensitzerhöhung auf einer Toilettenschüssel mit Montageöffnungen. Solche Montageöffnungen können sacklochartig ausgebildet sein oder in das hohle Innere der Toilettenschüssel führen.

Aus dem Stand der Technik sind Befestigungsvorrichtungen und Montageeinheiten für diesen Anwendungsfall im Allgemeinen bekannt. Übliche Systeme, wie sie in der KR 102039873 B1 oder der DE 102020122834 A1 gezeigt sind, funktionieren im Wesentlichen so, dass das zu befestigende Bauteil an den Körper angelegt wird, sodass die Löcher des Bauteils mit den Montageöffnungen der Toilettenschüssel übereinstimmen und die, vorerst vom Bauteil separiert vorhandenen, Befestigungsvorrichtungen von einer Seite zuerst durch das Bauteil und dann in den Körper eingeführt und verspreizt werden.

Dabei weisen diese Systeme zwei große Nachteile auf. Einerseits erfordert die Montage eine Vielzahl an, teils umständlichen, Montageschritten, wobei ein präzises Auflegen des Bauteils auf den Körper und das Beibehalten der korrekt ausgerichteten Position erforderlich ist, um die Befestigungsvorrichtung in die Montageöffnungen einführen zu können, und wobei die Befestigungsvorrichtungen nacheinander eingeführt werden müssen.

Andererseits sind diese Systeme so konzipiert, dass sie sich mittels Spreizarmen, welche durch eine sich in Richtung Spreizarme bewegende Hülse auseinandergespreizt werden, gegen die Montageöffnung oder eine Innenfläche des Körpers verspreizen und so sich selbst und das zu befestigende Bauteil am Körper fixieren. Da hier die Hülse jeweils getrennt vom Dübel bzw. den Spreizarmen ausgebildet ist, kann es nachteiligerweise passieren, dass die Hülse die Verbindung zum Rest der Befestigungsrichtung verliert und runterfällt, möglicherweise sogar im Hohlkörper verloren geht. Dies ist vor allem bei der Montage und Demontage des Systems problematisch. Außerdem kann bei der Montage vor dem Einbau der Befestigungsvorrichtung in das Bauteil und den Körper ein zusätzlicher Montageschritt erforderlich sein, um die Hülse in eine optimale Position relativ zu den Spreizarmen zu bringen, damit sie sich in Richtung der Spreizarme bewegen kann und eben nicht verloren geht. Im montierten Zustand würde die Befestigungsvorrichtung bei einem Verlust der Hülse natürlich gänzlich ihre Funktion verlieren.

Die Aufgabe der vorliegenden Erfindung ist es nun, die Nachteile des Stands der Technik zu beheben und damit eine besonders einfache und schnelle Montage und Demontage zu ermöglichen.

Diese Aufgabe wird in einem ersten Aspekt durch die Merkmale des Anspruchs 1 gelöst, nämlich mit einer Befestigungsvorrichtung zur Befestigung eines Bauteils an einem Körper mit wenigstens einer Montageöffnung, wobei die Befestigungsvorrichtung
- eine erste Baugruppe, welche dazu ausgebildet ist, zumindest bereichsweise in die wenigstens eine Montageöffnung des Körpers eingeführt zu werden, und
- eine zweite Baugruppe, welche dazu ausgebildet ist, an einer ersten Seite des Bauteils angelegt zu werden,
aufweist, wobei die erste Baugruppe durch ein Zusammenwirken eines Befestigungsmittels mit der ersten Baugruppe und der zweiten Baugruppe gegen eine Innenfläche des Körpers verspreizbar ist, wobei die erste Baugruppe dazu ausgebildet ist, an einer der ersten Seite gegenüberliegenden, zweiten Seite des Bauteils angelegt zu werden, wodurch die erste Baugruppe und die zweite Baugruppe zusammen zum Halten des Bauteils ausgebildet sind.

Der große Vorteil dieser Erfindung besteht darin, dass die Befestigungsvorrichtung am Bauteil vormontiert werden kann, bevor das Bauteil an den Körper angelegt wird. Das Bauteil und die Befestigungsvorrichtung(en) können als eine Montageeinheit einfach gehalten, positioniert und am Körper befestigt werden.
D.h. insbesondere im Falle, dass mehrere Befestigungsvorrichtungen eingesetzt werden, dass die Montageeinheit mit einer Hand gehalten und positioniert werden kann und die Befestigungsvorrichtungen dabei gleichzeitig in die Montageöffnungen eingeführt werden können. Die Erfindung ermöglicht somit im Vergleich zum Stand der Technik eine deutliche einfachere und schnellere Montage. Dieselben Vorteile kommen natürlich bei umgekehrter Schrittabfolge auch bei der Demontage zum Tragen.

Die Vormontage der Befestigungsvorrichtung am Bauteil zu einer Montageeinheit kann vorteilhafterweise ab Werk erfolgen, sodass für eine Bedienperson Montageschritte zum Einsetzen der Befestigungsvorrichtung in das Bauteil entfallen.

Die Vormontage kann aber grundsätzlich auch erst unmittelbar vor einem Einbau des Bauteils am Körper erfolgen, insbesondere sodass die einzelnen Komponenten platzsparend verpackt ab Werk ausgeliefert werden können.

Theoretisch wäre es auch denkbar, die Befestigungsvorrichtung nicht am Bauteil vorzumontieren, d.h. insbesondere die erste Baugruppe in den Körper einzuführen, das Bauteil an die erste Baugruppe anzulegen und die zweite Baugruppe an das Bauteil anzulegen.

Die erste Baugruppe und die zweite Baugruppe sind also zusammen zum Halten des Bauteils ausgebildet, insbesondere wobei die Position der Befestigungsvorrichtung relativ zum Bauteil fixierbar ist.

Man könnte auch sagen, dass die Befestigungsvorrichtung dazu ausgebildet ist, vom Bauteil gehalten oder festgehalten zu werden. Dadurch ist es vorteilhafterweise möglich, dass die Befestigungsvorrichtung gezielt in die Montageöffnung eingeführt werden kann, während das Bauteil beim Anlegen an den Körper mit einer Hand gehalten werden kann.

Gegebenenfalls kann eine Drehung der Befestigungsvorrichtung um seine Längsachse möglich sein, solange sein Winkel zum Bauteil erhalten bleibt.

Vorzugsweise ist die Befestigungsvorrichtung, insbesondere die erste Baugruppe, dazu ausgebildet, orthogonal ausgerichtet an das Bauteil angelegt zu werden.

Die Montageöffnung kann z.B. ein Sackloch sein und/oder gleich tief wie eine Wandstärke des Körpers sein und/oder weiter als durch eine Wand des Körpers in den Körper reichen.

Die Innenfläche, gegen welche sich die Befestigungsvorrichtung, insbesondere die erste Baugruppe, verspreizt, kann eine Innenfläche der Montageöffnung sein. Sie kann auch eine Innenfläche des Körpers, insbesondere Hohlkörpers, sein, welche an die Montageöffnung angrenzt.

Die erste Seite des Bauteils ist insbesondere jene Seite, welche in einem montierten Zustand des Bauteils vom Körper abgewandt ist.

Die zweite Seite des Bauteils ist insbesondere jene Seite, welche im montierten Zustand des Bauteils dem Körper zugewandt ist.

Im montierten Zustand der Befestigungsvorrichtung stellt die erste Baugruppe insbesondere die Verbindung zwischen dem Körper und der Befestigungsvorrichtung her.

Im montierten Zustand der Befestigungsvorrichtung stellt die zweite Baugruppe insbesondere die Verbindung zwischen der Befestigungsvorrichtung und dem Bauteil her.

Durch diese Trennung der Funktionen der ersten Baugruppe und der zweiten Baugruppe erfolgt vorteilhafterweise auch eine optimierte Aufteilung der Kraftflüsse und Spannungen innerhalb der Befestigungsvorrichtung.
D.h. insbesondere, dass, abgesehen vom Befestigungsmittel, die erste Baugruppe alle durch das Spreizen auftretenden Kräfte aufnehmen kann, ohne diese an die zweite Baugruppe zu übertragen. Umgekehrt kann die zweite Baugruppe alle durch das Festhalten des Bauteils auftretenden Kräfte aufnehmen, ohne diese an die erste Bauteilgruppe weiterzugeben.

Eine Spannkraft innerhalb der Befestigungsvorrichtung zwischen der ersten Baugruppe und der zweiten Baugruppe wird, vorzugsweise ausschließlich, durch das Befestigungsmittel erzeugt.

Das Befestigungsmittel ist vorzugsweise aus einem Metall, z.B. Stahl oder Aluminium, ausgebildet, sodass es besonders gut zur Aufnahme von Zugkräften geeignet ist.

Die räumliche Trennung der ersten Baugruppe und der zweiten Baugruppe ermöglicht insbesondere, dass sie hinsichtlich ihrer unterschiedlichen Funktionen jeweils optimiert ausgebildet sein können.

Es ist besonders bevorzugt vorgesehen, dass die erste Baugruppe einen Kopf zum Anlegen an das Bauteil aufweist, insbesondere um eine stabile Positionierung der ersten Baugruppe und des Bauteils zueinander zu gewährleisten.

Es ist besonders bevorzugt vorgesehen, dass die zweite Baugruppe einen Kopf zum Anlegen an das Bauteil aufweist, insbesondere um eine stabile Positionierung der zweiten Baugruppe und des Bauteils zueinander zu gewährleisten.

Vorzugsweise ist der Kopf der ersten Baugruppe und/oder der zweiten Baugruppe dazu ausgebildet, durch Zusammenwirken mit einer Führungsfläche am Bauteil Rotationen der ersten Baugruppe und/oder der zweiten Baugruppe relativ zum Bauteil im Wesentlichen zu verhindern. So ist das "im Wesentlichen verhindern" zu verstehen.

Beispielsweise ist der Kopf in einer Draufsicht entlang der Längsachse polygonal ausgebildet, sodass zumindest eine der Seiten des Polygons an der Führungsfläche anliegt, was die Rotation im Wesentlichen verhindert.

Aufgrund von Fertigungstoleranzen können natürlich minimale, für die Funktion unwesentliche rotatorische oder auch translatorische Relativbewegungen nicht vollständig ausgeschlossen werden.

Es kann vorgesehen sein, dass die erste Baugruppe und/oder die zweite Baugruppe einen Hals aufweist, welcher zum Einführen in wenigstens ein Loch, vorzugsweise Langloch, des Bauteils ausgebildet ist. Der Hals kann vorteilhafterweise zur verbesserten Ausrichtung der ersten Baugruppe und/oder der zweiten Baugruppe relativ zum Bauteil dienen. Es ist auch denkbar, dass der Hals zur Führung der Befestigungsvorrichtung in einem Langloch des Bauteils dient.

In besonders bevorzugten Ausführungsbeispielen weist die erste Baugruppe einen Dübel und/oder wenigstens, vorzugsweise genau, zwei Spreizarme auf, vorzugsweise wobei die wenigstens zwei Spreizarme Teil des Dübels sind. Dadurch wird als Beispiel bevorzugt das Merkmal realisiert, dass "die erste Baugruppe durch ein Zusammenwirken eines Befestigungsmittels mit der ersten Baugruppe und der zweiten Baugruppe gegen eine Innenfläche des Körpers verspreizbar ist".

Die erste Baugruppe kann aber auch mit einem anders gearteten Spreizmechanismus gegen die Innenfläche des Körpers verspreizt werden. Beispielsweise kann der Spreizmechanismus ein, z.B. wulstförmiges und/oder lamellenförmiges, Elastomer aufweisen, welches dazu ausgebildet ist, sich mittels einer Kompression auszudehnen und gegen die Innenfläche gedrückt zu werden.

Besonders bevorzugt weist die erste Baugruppe eine Hülse auf, welche dazu ausgebildet ist, mit dem Dübel und/oder den wenigstens zwei Spreizarmen zusammenzuwirken, indem die Hülse den Dübel und/oder die Spreizarme gegen die Innenfläche des Körpers drückt.

Vorzugsweise sind die wenigstens zwei Spreizarme in Richtung Hülse offen ausgebildet.

Es ist bevorzugt vorgesehen, dass die Hülse wenigstens ein Anschlagelement aufweist, welches vorzugsweise dazu ausgebildet ist, eine Drehung der Hülse relativ zum Dübel, insbesondere relativ zu den wenigstens zwei Spreizarmen, zu begrenzen und/oder im Wesentlichen zu blockieren.

Das wenigstens eine, insbesondere längliche, Anschlagelement kann auch zur Aussteifung der Hülse ausgebildet sein, insbesondere um einen Bereich mit geringeren Wandstärken zu verstärken.

In bevorzugten Ausführungsbeispielen sind wenigstens zwei Anschlagelemente vorgesehen, welche sich im Wesentlichen parallel zur Längsachse entlang der Hülse erstrecken.

Es ist auch denkbar, dass die Hülse mit den wenigstens zwei Spreizarmen zumindest bereichsweise verbunden ist, insbesondere wobei die wenigstens zwei Spreizarme dazu ausgebildet sind, sich durch Zusammenwirken des Befestigungsmittels mit der ersten Baugruppe und der zweiten Baugruppe auszubeulen und dadurch gegen die Innenfläche des Körpers zu verspreizen.

Es ist bevorzugt vorgesehen, dass das Befestigungsmittel eine Schraube mit einem Gewinde ist, insbesondere sodass ein kostengünstiges Standardbauteil verwendet werden kann.

Die zu lösende Aufgabe wird in einem zweiten Aspekt durch die Merkmale des Anspruchs 8 gelöst, nämlich mit einer Befestigungsvorrichtung zur Befestigung des Bauteils am Körper mit wenigstens einer Montageöffnung, wobei die Befestigungsvorrichtung
- einen Dübel mit wenigstens, vorzugsweise genau, zwei Spreizarmen und
- eine Hülse mit wenigstens einem abstehenden Fortsatz umfasst, wobei zumindest ein Spreizarm der wenigstens zwei Spreizarme eine Eingriffsausnehmung zur verschieblichen Aufnahme des wenigstens einen Fortsatzes aufweist, wobei die Eingriffsausnehmung einen Anschlag aufweist, welcher dazu ausgebildet ist, beim Zusammenwirken des Fortsatzes mit dem Anschlag eine Bewegung der Hülse weg vom Dübel zu begrenzen.

Der Dübel kann hierbei ein Teilelement der ersten Baugruppe sein, wobei er dazu ausgebildet ist, an die zweite Seite des Bauteils angelegt zu werden.

Der Dübel kann alternativ dazu ausgebildet sein, an die erste Seite des Bauteils angelegt zu werden und/oder ausgehend von der ersten Seite durch das Bauteil durchgeführt zu werden.

Der große Vorteil einer derartigen Befestigungsvorrichtung besteht darin, dass die Hülse im Betriebszustand der Befestigungsvorrichtung stets in Verbindung mit dem Dübel steht und so nicht verloren gehen kann. Eine Bedienperson muss sich bei der Montage oder Demontage der Befestigungsvorrichtung somit keinerlei Gedanken machen, ob die Hülse relativ zum Dübel korrekt positioniert ist. Außerdem wird sie auch nicht durch plötzliches Abfallen der Hülse überrascht. Im Stand der Technik konnte die Hülse in den Körper fallen und damit verloren sein.

In besonders bevorzugten Ausführungsbeispielen ist es vorgesehen, dass die wenigstens zwei Spreizarme eine gewisse Flexibilität aufweisen, vorzugsweise um die Hülse mit dem Dübel ein- und ausrasten zu können und/oder um sich gegen die Innenfläche des Körpers verspreizen zu können.

D.h. insbesondere auch, dass die wenigstens zwei Spreizarme vorzugsweise derart steif ausgebildet sind, dass sie im unverspreizten Zustand ihre Ausgangsform beibehalten und/oder beim Entspreizen oder Lösen in diese Ausgangsform zurückbewegen. Vorteilhafterweise können dadurch alle gängigen Montageöffnungsdurchmesser von Toilettenschüsseln, insbesondere Montageöffnungsdurchmesser von 13-17 mm nach DIN EN 33 (WC-Becken und WC-Anlagen - Anschlussmaße; Deutsche Fassung EN 33:2019), abgedeckt werden.

In besonders bevorzugten Ausführungsbeispielen sind genau zwei Spreizarme vorgesehen, vorzugsweise welche symmetrisch relativ zu einer Spiegelebene durch die Längsachse der Befestigungsvorrichtung angeordnet sind und/oder deren Außenflächen eine teilweise Zylinderform bilden. Mit genau zwei Spreizarmen lässt sich im Vergleich zu drei oder mehreren Spreizarmen eine höhere Steifigkeit erzielen, was vorteilhafterweise eine Verspreizungskraft und/oder die elastische Rückverformung verbessern kann.

Es ist bevorzugt vorgesehen, dass sich die Eingriffsausnehmung parallel zur Längsachse der Befestigungsvorrichtung erstreckt.

In besonders bevorzugten Ausführungsbeispielen ist das wenigstens eine Anschlagelement und/oder der wenigstens eine Fortsatz mit der ersten Baugruppe und/oder dem Dübel, vorzugsweise mit den wenigstens zwei Spreizarmen, in Eingriff bringbar, sodass eine Rotation der Hülse um die Längsachse der Befestigungsvorrichtung relativ zur ersten Baugruppe und/oder relativ zum Dübel, im Wesentlichen blockierbar ist.

Aufgrund von Fertigungstoleranzen und insbesondere aufgrund möglicher variierender Abstände zwischen dem wenigstens einem Anschlagelement und/oder dem wenigstens einen Fortsatz und der ersten Baugruppe und/oder dem Dübel ist die Rotation nicht unbedingt vollständig blockierbar.
D.h. vor allem, dass sich die Hülse um einen gewissen Bereich um die Längsachse drehen kann, bis das wenigstens eine Anschlagelement und/oder der wenigstens eine Fortsatz am Dübel, insbesondere an wenigstens einem der Spreizarme, und/oder an einem Rand der Eingriffsöffnung anschlägt und dadurch blockiert wird. In diesem Sinn ist "im Wesentlichen blockierbar" zu verstehen.

In besonders bevorzugten Ausführungsbeispielen weist die Befestigungsvorrichtung genau zwei Spreizarme mit jeweils einer Eingriffsausnehmung eine Hülse mit zwei Fortsätzen zum Einhaken in den zwei Eingriffsausnehmungen auf.

Es ist bevorzugt vorgesehen, dass die Befestigungsvorrichtung eine Schraube mit einem Gewinde umfasst, wobei die Schraube in der Betriebsstellung der Befestigungsvorrichtung den Dübel und die Hülse durchgreift.

Vorzugsweise weist die Hülse ein Innengewinde auf, welches dazu ausgebildet ist, mit dem Gewinde der Schraube zusammenzuwirken, sodass die Hülse durch Rotation der Schraube um die Längsachse unter Eingriff des wenigstens einen Anschlagelements und/oder Fortsatzes mit der ersten Baugruppe und/oder dem Dübel, vorzugsweise mit den wenigstens zwei Spreizarmen, entlang des Gewindes der Schraube verfahrbar ist.

Das Gewinde kann über eine gesamte Schraubenlänge reichen oder nur bereichsweise, insbesondere in einem Bereich, entlang welchem sich die Hülse bewegt, vorgesehen sein.

Es ist bevorzugt vorgesehen, dass die Hülse zumindest eine innerhalb der Hülse angeordnete, vorzugsweise darin befestigte, Mutter aufweist, wobei das Innengewinde der Hülse dem Innengewinde der wenigstens einen Mutter entspricht.

Anstatt einer Mutter kann auch ein anderweitiger metallener Einsatz mit einem Innengewinde vorgesehen sein. Mit einem metallenen Einsatz oder einer metallenen Mutter kann ein besonders dauerhaftes Innengewinde bereitgestellt werden.

In bevorzugten Ausführungsbeispielen weist die Hülse wenigstens eine Spreizfläche auf, welche dazu ausgebildet ist, bei einer Bewegung der Hülse in Richtung des Dübels die wenigstens zwei Spreizarme auseinander zu spreizen. So kann die Befestigungsvorrichtung kontinuierlich gespreizt werden, ohne dass sie ruckartig belastet wird.

Vorzugsweise verjüngt sich die wenigstens eine Spreizfläche entlang der Längsachse der Befestigungsvorrichtung in Richtung Dübel, vorzugsweise wobei die Spreizfläche im Wesentlichen konisch ausgebildet ist.

Es kann vorgesehen sein, dass die wenigstens zwei Spreizarme nach innen hin orientierte Gleitflächen aufweisen, welche dazu ausgebildet sind, die Hülse, vorzugsweise die wenigstens eine Spreizfläche der Hülse, beim Bewegen der Hülse in Richtung des Dübels entlanggleiten zu lassen. So kann die Befestigungsvorrichtung unter gleichmäßiger Belastung vorteilhafterweise kontinuierlich gespreizt werden.

Es ist besonders bevorzugt vorgesehen, dass die Befestigungsvorrichtung eine zentrische Öffnung entlang der Längsachse aufweist, vorzugsweise wobei die Öffnung dazu ausgebildet ist, das Befestigungsmittel und/oder die Schraube drehbar um die Längsachse und/oder unverschieblich quer zur Längsachse zu lagern.

Vorzugsweise ist die Öffnung zumindest in einem Bereich entlang der Längsachse, bevorzugt entlang ihrer gesamten Länge, kreisförmig ausgebildet.

In bevorzugten Ausführungsbeispielen ist oder sind die erste Baugruppe und/oder die zweite Baugruppe dazu ausgebildet, das Befestigungsmittel drehbar um die Längsachse und/oder unverschieblich quer zur Längsachse zu lagern.

Es ist besonders bevorzugt vorgesehen, dass der Dübel wenigstens einen Kopf aufweist, welcher zum Anlegen an die erste Seite des Bauteils ausgebildet ist.

In bevorzugten Ausführungsbeispielen weist der Kopf der ersten Baugruppe und/oder der zweiten Baugruppe und/oder des Dübels zwei zueinander parallele Außenflächen quer zu einer Längsachse des Befestigungsmittels auf, insbesondere wobei die Außenflächen zur Führung des Befestigungsmittels entlang von Führungsflächen des Bauteils dienen.

Der Kopf der ersten Baugruppe und/oder der zweiten Baugruppe und/oder des Dübels kann in einer Draufsicht entlang der Längsachse rechteckig, vorzugsweise quadratisch, sein. Der Kopf kann auch kreisförmig sein oder eine andere Form aufweisen.

Schutz wird weiters auch begehrt für eine Montageeinheit zur Befestigung am Körper, wobei die Montageeinheit wenigstens eine erfindungsgemäße Befestigungsvorrichtung und ein Bauteil mit wenigstens einem Loch, vorzugsweise Langloch, aufweist, wobei die Befestigungsvorrichtung in einem Betriebszustand der Montageeinheit durch das wenigstens eine Loch durchgeführt ist.

Vorzugsweise ist das Bauteil länglich ausgebildet, insbesondere sodass es sich zumindest zwischen zwei Montageöffnungen des Körpers erstreckt.

In bevorzugten Ausführungsbeispielen weist das Bauteil an seinen beiden Endbereichen jeweils ein Befestigungselement zum, vorzugsweise lösbaren und/oder höhenverstellbaren, Aufstecken und/oder Einstecken von Anbauteilen auf.

Anbauteile können insbesondere ein Toilettendeckel und/oder eine Toilettensitzerhöhung sein, wobei diese direkt oder indirekt mittels Zusatzbauteilen am Bauteil aufgesteckt und/oder eingesteckt und/oder anderweitig befestigt werden können.

In besonders bevorzugten Ausführungsbeispielen weist das Bauteil selbst und/oder ein am Bauteil anbringbares Zusatzbauteil ein Höhenverstellelement zum höhenverstellbaren Befestigen eines Toilettendeckels und/oder einer Toilettensitzerhöhung am Bauteil auf.

Besonders bevorzugt stellt das wenigstens eine Loch des Bauteils wenigstens zwei in eine Längsrichtung des Bauteils ausgerichtete und entlang der Längsrichtung voneinander beabstandete Langlöcher dar, welche auf wenigstens zwei Montageöffnungen des Körpers abgestimmt sind. Eine derartige Ausbildung bedingt ein besonders stabiles Bauteil.

In bevorzugten Ausführungsbeispielen weist das wenigstens eine Loch entlang der Längsrichtung in einer Draufsicht entlang der Längsachse der Befestigungsvorrichtung eine Lochbreite auf, welche kleiner ist als ein Außendurchmesser der wenigstens zwei Spreizarme in einem unverspreizten Zustand des Befestigungsmittels und/oder der Hülse. So kann die Position der Befestigungsvorrichtung relativ zum Bauteil besonders gut beibehalten werden, insbesondere sodass die Befestigungsvorrichtung in einem vormontierten Zustand nicht aus dem wenigstens einen Loch fallen kann.

Es ist bevorzugt vorgesehen, dass zumindest eines der wenigstens zwei Langlöcher in einer Seitenansicht quer zur Längsachse des Befestigungsmittels innerhalb zumindest einen nach innen abgestuften Abschnitt aufweist, wobei der zumindest eine Abschnitt zur bündigen und/oder abschnittsweise versenkten Aufnahme eines Kopfs der Schraube und/oder eines Kopfs des Befestigungsmittels ausgebildet ist.

Insbesondere weist das Bauteil an der ersten Seite einen nach innen abgestuften Abschnitt auf, in welchem der Kopf der Schraube und/oder der Kopf des Dübels bündig und/oder abschnittsweise versenkt angelegt werden kann.

Vorzugsweise weist das Bauteil an der zweiten Seite einen nach innen abgestuften Abschnitt auf, in welchem der Kopf der ersten Baugruppe und/oder der Kopf des Dübels bündig und/oder abschnittsweise versenkt angelegt werden kann.

Der wenigstens eine nach innen abgestufte Abschnitt weist bevorzugt eine Führungsfläche auf, welche insbesondere zur Führung des Befestigungsmittels im wenigstens einen Langloch dient.

Das Bauteil ist vorzugsweise zumindest bereichsweise als ein offener Hohlkörper ausgebildet, wodurch Material eingespart werden kann.

Vorzugsweise weist das Bauteil, insbesondere eine zur zweiten Seite hin, offene Verrippung zur gezielten Aussteifung des Bauteils auf.

Zur Herstellung der Montageeinheit können insbesondere die folgenden Verfahrensschritte ausgeführt werden:
- Anlegen der ersten Baugruppe an die zweite Seite des Bauteils und Anlegen der zweiten Baugruppe an die erste Seite des Bauteils;
- Durchführen des Befestigungsmittels durch die zweite Baugruppe, das Bauteil und die erste Baugruppe;
- optionales Verbinden des Befestigungsmittels mit der Hülse der ersten Baugruppe.

Zur Herstellung der Montageeinheit können alternativ die folgenden Verfahrensschritte, nicht zwingend in dieser Reihenfolge, ausgeführt werden:
- Einrasten der Hülse in die wenigstens eine Eingriffsausnehmung des wenigstens einen Spreizarms;
- Durchführen des Befestigungsmittels durch das Bauteil und die Befestigungsvorrichtung;
- optionales Verbinden des Befestigungsmittels mit der Hülse.

Es wird außerdem Schutz begehrt für eine Anordnung mit der Montageeinheit umfassend ein längliches Bauteil mit zwei Löchern und mit an den beiden Endbereichen des Bauteils vorgesehenen Befestigungselementen zum, vorzugsweise lösbaren und/oder höhenverstellbaren, Anbringen eines Toilettendeckels und/oder einer Toilettensitzerhöhung, wobei das Bauteil in Abstimmung der Löcher des Bauteils mit zwei Montageöffnungen der Toilettenschüssel an der Toilettenschüssel im Wesentlichen angelegt ist und je Montageöffnung mittels einer erfindungsgemäßen Befestigungsvorrichtung verspreizt oder verspreizbar ist.

Schutz wird auch begehrt für eine Verwendung einer erfindungsgemäßen Befestigungsvorrichtung oder Montageeinheit zur, insbesondere direkten oder mittels Zusatzelementen indirekten, Montage eines Toilettensitzes oder einer Toilettensitzerhöhung an einer Toilettenschüssel. Weitere Vorteile und Einzelheiten vorteilhafter Varianten der Erfindung ergeben sich aus den Figuren sowie der dazugehörigen Figurenbeschreibung. Dabei zeigen:
- Fig. 1: eine erste Variante einer Montageeinheit mit einem ersten Ausführungsbeispiel einer erfindungsgemäßen Befestigungsvorrichtung,
- Fig. 2-4: Explosionsdarstellungen des ersten Ausführungsbeispiels einer erfindungsgemäßen Befestigungsvorrichtung,
- Fig. 5-8: Explosionsdarstellungen der ersten Variante der Montageeinheit,
- Fig. 9-10: Ansichten der ersten Variante der Montageeinheit und
- Fig. 11-12: Ansichten einer zweiten Variante der Montageeinheit.

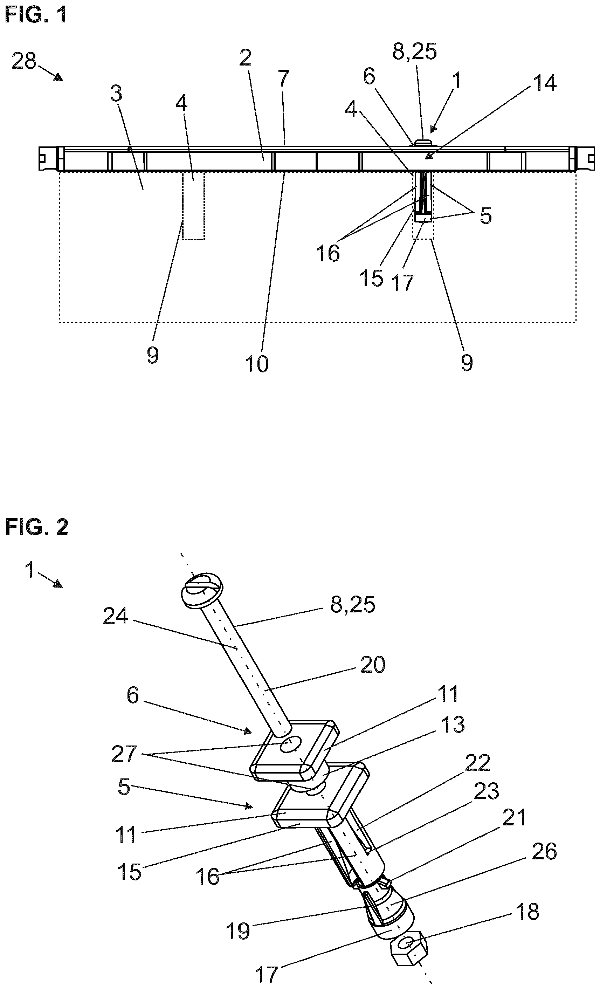

Die Fig. 1 zeigt eine erste bevorzugte Variante einer Montageeinheit 28 zur Befestigung an einem Körper 3, z.B. eine Toilettenschüssel, mit wenigstens einer Montageöffnung 4, wobei die Montageeinheit 28 wenigstens ein erstes Ausführungsbeispiel einer erfindungsgemäßen Befestigungsvorrichtung 1 und ein Bauteil 2 mit wenigstens einem Loch 14, vorzugsweise Langloch, aufweist, wobei die Befestigungsvorrichtung 1 in einem Betriebszustand der Montageeinheit 28 durch das wenigstens eine Loch 14 durchgeführt ist.

Die Befestigungsvorrichtung 1 umfasst eine erste Baugruppe 5, welche dazu ausgebildet ist, zumindest bereichsweise in die wenigstens eine Montageöffnung 4 des Körpers 3 eingeführt zu werden, und eine zweite Baugruppe 6, welche dazu ausgebildet ist, an einer ersten Seite 7 des Bauteils 2 angelegt zu werden, wobei die erste Baugruppe 5 durch ein Zusammenwirken eines Befestigungsmittels 8, wie z.B. einer Schraube 25 mit einem Gewinde 20, mit der ersten Baugruppe 5 und der zweiten Baugruppe 6 gegen eine Innenfläche 9 des Körpers 3 verspreizbar ist, wobei die erste Baugruppe 5 dazu ausgebildet ist, an einer der ersten Seite 7 gegenüberliegenden, zweiten Seite 10 des Bauteils 2 angelegt zu werden, wodurch die erste Baugruppe 5 und die zweite Baugruppe 6 zusammen zum Halten des Bauteils 2 ausgebildet sind.

Bei diesem Ausführungsbeispiel weist die erste Baugruppe 5 einen Dübel 15 mit wenigstens, vorzugsweise genau, zwei Spreizarmen 16 und eine Hülse 17 auf.

Bei den nun folgenden Beschreibungen der in den folgenden Figuren gezeigten Varianten und Ausführungsbeispiele wird zur Vermeidung von Wiederholungen vorrangig auf die Unterschiede zur ersten Variante der Montageeinheit 28 und dem ersten Ausführungsbeispiel der Befestigungsvorrichtung 1 eingegangen. Ansonsten gilt die obige Beschreibung soweit anwendbar auch für die nachfolgend noch beschriebenen Varianten bzw. Ausführungsbeispiele.

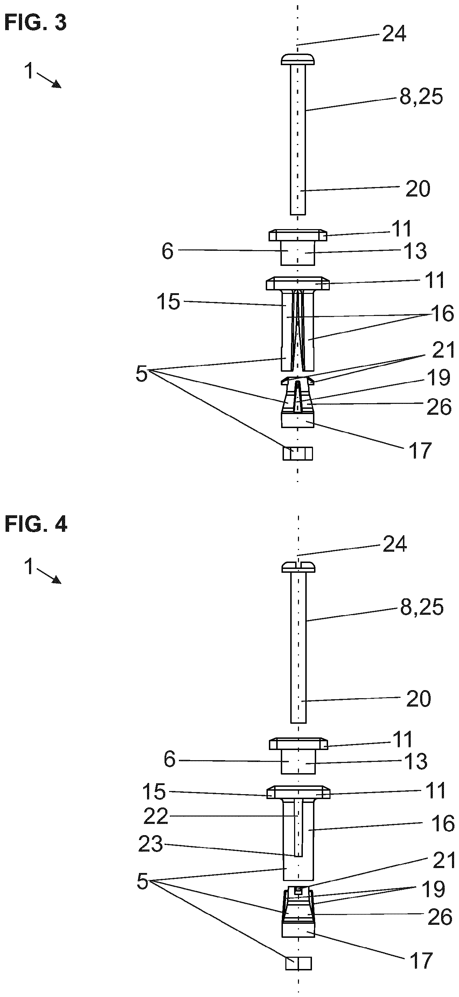

Die Fig. 2-4 zeigen Explosionsdarstellungen des ersten Ausführungsbeispiels der erfindungsgemäßen Befestigungsvorrichtung 1. Die Fig. 2 zeigt dabei eine perspektivische Ansicht; die Fig. 3 und 4 jeweils eine Seitenansicht.

Bei diesem besonders bevorzugten Ausführungsbeispiel der Befestigungsvorrichtung 1 weist die Hülse 17 wenigstens einen abstehenden Fortsatz 2 auf und zumindest ein Spreizarm 16 der wenigstens zwei Spreizarme 16 eine Eingriffsausnehmung 22 zur verschieblichen Aufnahme des wenigstens einen Fortsatzes 21 auf, wobei die Eingriffsausnehmung 22 wenigstens einen Anschlag 23 aufweist, welcher dazu ausgebildet ist, beim Zusammenwirken des wenigstens einen Fortsatzes 21 mit dem wenigstens einen Anschlag 23 eine Bewegung der Hülse 17 weg vom Dübel 15 zu begrenzen.

Bei diesem Ausführungsbeispiel weist die erste Baugruppe 5 einen Hals 13 auf, welcher zum Einführen in das wenigstens eine Loch 14, vorzugsweise Langloch, des Bauteils 2 ausgebildet ist.

Es kann auch sein, dass die zweite Baugruppe 6 einen Hals 13 aufweist, welcher zum Einführen in das wenigstens eine Loch 14, vorzugsweise Langloch, des Bauteils 2 ausgebildet ist.

In den Fig. 2-4 ist gezeigt, dass die Befestigungsvorrichtung 1 vorzugsweise eine Schraube 25 mit einem Gewinde 20 (nur schematisch, nicht detailliert dargestellt) aufweist, wobei die Schraube 25 in einer Betriebsstellung der Befestigungsvorrichtung 1 den Dübel 15 und die Hülse 17 durchgreift.

Bei diesem Ausführungsbeispiel weist die Hülse 17 eine darin befestigte Mutter mit einem Innengewinde 18 und/oder wenigstens ein Anschlagelement 19 auf, insbesondere wobei das wenigstens eine Anschlagelement 19 in der Betriebsstellung der Befestigungsvorrichtung 1 zwischen den wenigstens zwei Spreizarmen 16 angeordnet ist.

Besonders bevorzugt ist das Innengewinde 18 der Hülse 17 oder der Mutter dazu ausgebildet, mit dem Gewinde 20 der Schraube 25 zusammenzuwirken, sodass die Hülse 17 durch Rotation der Schraube 25 um die Längsachse 24 unter Eingriff des wenigstens einen Anschlagelements 19 und/oder Fortsatzes 21 mit der ersten Baugruppe 5 und/oder dem Dübel 15, vorzugsweise mit den wenigstens zwei Spreizarmen 16, entlang des Gewindes 20 der Schraube 25 verfahrbar ist.

Wie aus den Fig. 2-4 hervorgeht, ist das wenigstens eine Anschlagelement 19 und/oder der wenigstens eine Fortsatz 21 vorzugsweise mit der ersten Baugruppe 5 und/oder dem Dübel 15, insbesondere mit den wenigstens zwei Spreizarmen 16, in Eingriff bringbar, sodass eine Rotation der Hülse 17 um eine Längsachse 24 der Befestigungsvorrichtung 1 relativ zur ersten Baugruppe 5 und/oder relativ zum Dübel 15 im Wesentlichen blockierbar.

Bei diesem Ausführungsbeispiel weist die Hülse 17 wenigstens eine Spreizfläche 26 auf, welche dazu ausgebildet ist, bei einer Bewegung der Hülse 17 in Richtung des Dübels 15 die wenigstens zwei Spreizarme 16 auseinander zu spreizen, vorzugsweise wobei sich die wenigstens eine Spreizfläche 26 entlang der Längsachse 24 in Richtung Dübel 15, z.B. konisch, verjüngt.

In den Fig. 2-4 ist weiters gezeigt, dass die Befestigungsvorrichtung 1 vorzugsweise eine zentrische Öffnung 27 entlang der Längsachse 24 aufweist, vorzugsweise wobei die Öffnung 27 dazu ausgebildet ist, das Befestigungsmittel 8, insbesondere die Schraube 25, drehbar um die Längsachse 24 und/oder unverschieblich quer zur Längsachse 24 zu lagern.

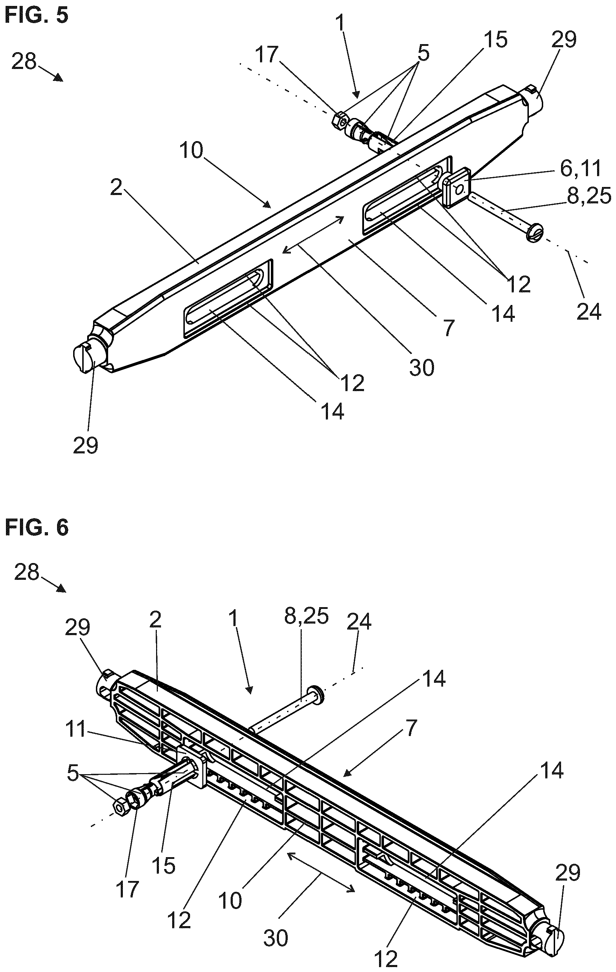

Aus den Fig. 2-4 und im Folgenden auch aus den Fig. 5-8 kann entnommen werden, dass die erste Baugruppe 5 und/oder der Dübel 15 besonders bevorzugt einen Kopf 11 zum Anlegen an das Bauteil 2 aufweist, vorzugsweise wobei der Kopf 11 dazu ausgebildet ist, durch Zusammenwirken mit einer Führungsfläche 12 am Bauteil 2 Rotationen der ersten Baugruppe 5 relativ zum Bauteil 2 im Wesentlichen zu verhindern.

Weiters ist hier gezeigt, dass die zweite Baugruppe 6 einen Kopf 11 zum Anlegen an das Bauteil 2 aufweist, vorzugsweise wobei der Kopf 11 dazu ausgebildet ist, durch Zusammenwirken mit einer Führungsfläche 12 am Bauteil 2 Rotationen der zweiten Baugruppe 6 relativ zum Bauteil 2 im Wesentlichen zu verhindern.

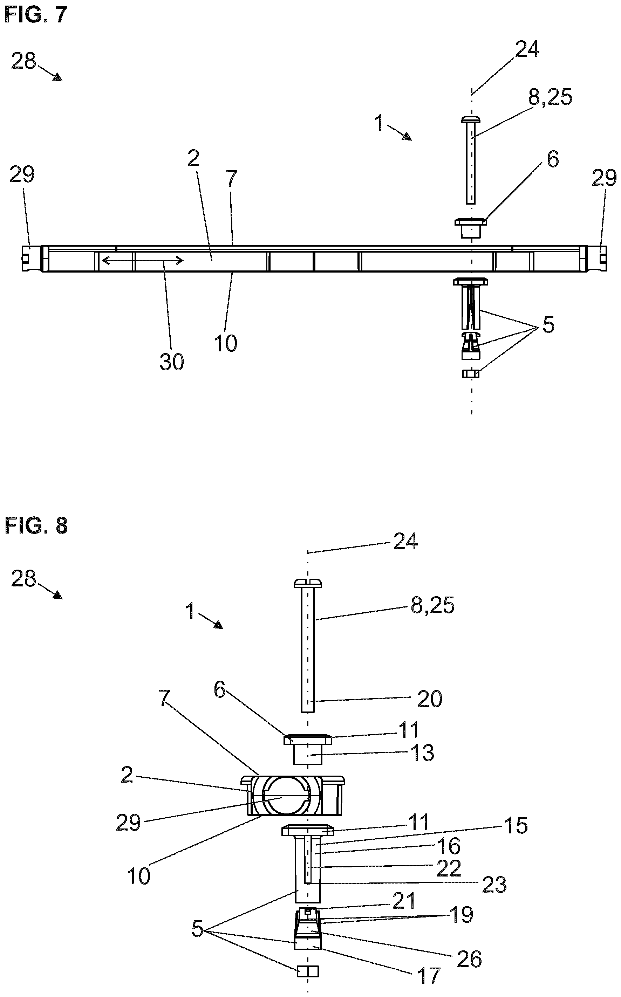

Die Fig. 5-8 zeigen Explosionsdarstellungen der ersten Variante der Montageeinheit 28, insbesondere wobei das Bauteil 2 länglich ist und die beiden Endbereiche des Bauteils 2 jeweils ein Befestigungselement 29 zum, vorzugsweise lösbaren und/oder höhenverstellbaren, Aufstecken und/oder Einstecken von Anbauteilen wie z.B. eine Toilettensitzerhöhung aufweisen. Die Fig. 5 und 6 zeigen dabei perspektivische Ansichten; die Fig. 7 und 8 Seitenansichten.

Aus den perspektivischen Explosionsdarstellungen der Fig. 5 und 6 geht hervor, dass das wenigstens eine Loch 14 des Bauteils 2 vorzugsweise wenigstens zwei in eine Längsrichtung 30 des Bauteils 2 ausgerichtete und entlang der Längsrichtung 30 voneinander beabstandete Langlöcher ist, wobei die Langlöcher auf wenigstens zwei Montageöffnungen 4 des Körpers 3 abgestimmt sind.

Aus den Fig. 5 und 6 geht weiters hervor, dass zumindest eines der wenigstens zwei Langlöcher in einer Seitenansicht quer zur Längsachse 24 des Befestigungsmittels 1 innerhalb zumindest einen nach innen abgestuften Abschnitt aufweist, wobei der zumindest eine Abschnitt zur bündigen und/oder abschnittsweise versenkten Aufnahme eines Kopfs der Schraube 25 und/oder eines Kopfs 11 des Befestigungsmittels 1 ausgebildet ist.

Der wenigstens eine nach innen abgestufte Abschnitt weist bevorzugt eine Führungsfläche 12 auf, welche insbesondere zur Führung des Befestigungsmittels 1 im wenigstens einen Langloch dient.

In der Fig. 6 sind außerdem, zur zweiten Seite 10 hin offene, Verrippungen zur gezielten Aussteifung des Bauteils 2 gezeigt. Mittels dieser Verrippungen kann das Bauteil 2 zur Einsparung von Material als ein offener Hohlkörper ausgebildet werden.

Es ist auch denkbar, dass die zweite Seite 10 geschlossen ausgebildet ist und Verrippungen zur ersten Seite 7 hin offen sind.

Alternativ können auch sowohl die erste Seite 7 als auch die zweite Seite 10 offen sein, sodass das Bauteil 2 im Wesentlichen aus Rippen besteht.

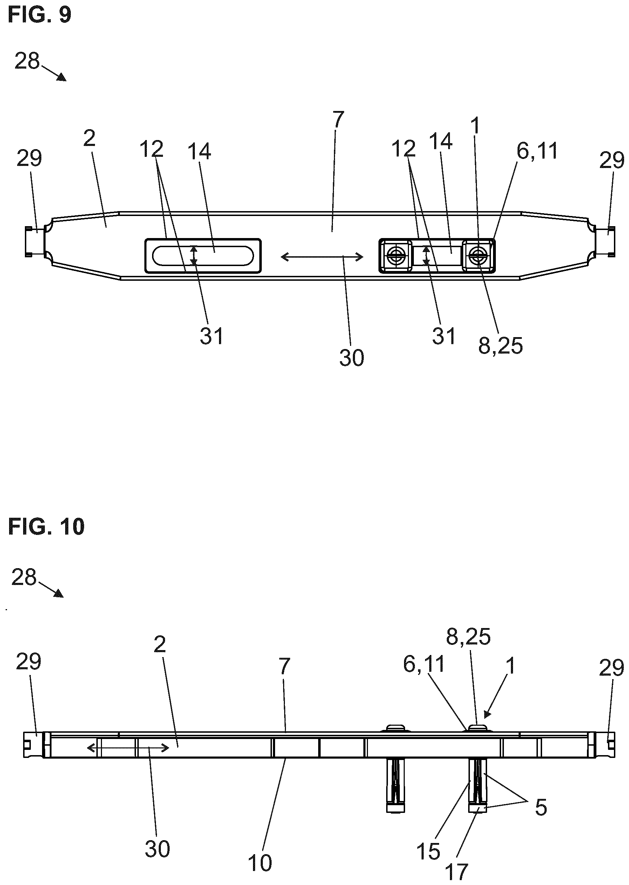

Die Fig. 9-10 zeigen Ansichten der ersten Variante der Montageeinheit 28 mit einem Bauteil 2 mit wenigstens einem Langloch, wobei zwei verschiedene Positionen der Befestigungsvorrichtung 1 in einem Langloch dargestellt sind (Bezugszeichen sind nur in einer Position eingezeichnet). Dies soll verdeutlichen, dass die Befestigungsvorrichtung 1 besonders bevorzugt verschieblich im Bauteil 2 gelagert ist, um eine optimale Abstimmung mit der wenigstens einen Montageöffnung 4 des Körpers 3 herstellen zu können.

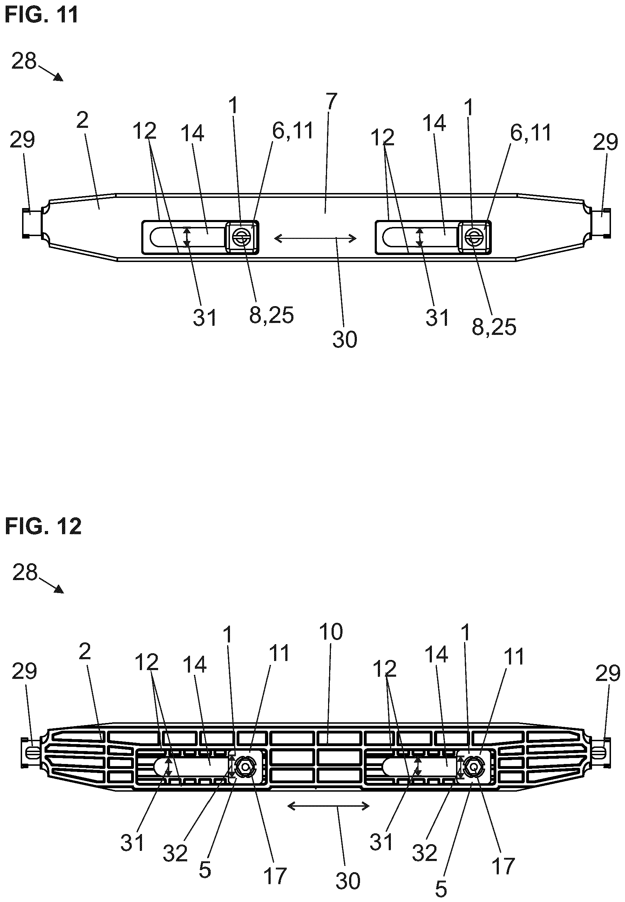

Die Fig. 11-12 zeigen Ansichten einer zweiten Variante der Montageeinheit 28 umfassend ein längliches Bauteil 2 mit zwei Löchern 14 und mit an den beiden Endbereichen des Bauteils 2 vorgesehenen Befestigungselementen 29 zum, vorzugsweise lösbaren und/oder höhenverstellbaren, Anbringen eines Toilettendeckels und/oder einer Toilettensitzerhöhung, wobei das Bauteil 2 in Abstimmung der Löcher 14 mit zwei Montageöffnungen 4 der Toilettenschüssel an der Toilettenschüssel im Wesentlichen anlegbar ist und je Montageöffnung 4 mittels einer Befestigungsvorrichtung 1 verspreizbar ist.

Je nachdem, wie eine Oberfläche der Toilettenschüssel ausgebildet ist, liegt das Bauteil 2 vollständig oder bereichsweise an der Toilettenschüssel an.

Aus den in Fig. 9-12 gezeigten Ansichten auf die Montageeinheiten 28 geht hervor, dass das wenigstens eine Loch 14 des Bauteils 2 vorzugsweise entlang der Längsrichtung 30 in einer Draufsicht entlang der Längsachse 24 der Befestigungsvorrichtung 1 eine Lochbreite 31 aufweist, welche kleiner ist als ein Außendurchmesser 32 der wenigstens zwei Spreizarme 16 in einem unverspreizten Zustand des Befestigungsmittels 1 und/oder der Hülse 17.

### Bezugszeichenliste:

- 1: Befestigungsvorrichtung
- 2: Bauteil
- 3: Körper
- 4: Montageöffnung
- 5: erste Baugruppe
- 6: zweite Baugruppe
- 7: erste Seite
- 8: Befestigungsmittel
- 9: Innenfläche
- 10: zweite Seite
- 11: Kopf
- 12: Führungsfläche
- 13: Hals
- 14: Loch
- 15: Dübel
- 16: Spreizarme
- 17: Hülse
- 18: Innengewinde
- 19: Anschlagelement
- 20: Gewinde
- 21: Fortsatz
- 22: Eingriffsausnehmung
- 23: Anschlag
- 24: Längsachse
- 25: Schraube
- 26: Spreizfläche
- 27: Öffnung
- 28: Montageeinheit
- 29: Befestigungselement
- 30: Längsrichtung
- 31: Lochbreite
- 32: Außendurchmesser

## Patentansprüche

1. Befestigungsvorrichtung (1) zur Befestigung eines Bauteils (2) an einem Körper (3) mit wenigstens einer Montageöffnung (4), wobei die Befestigungsvorrichtung (1)
- eine erste Baugruppe (5), welche dazu ausgebildet ist, zumindest bereichsweise in die wenigstens eine Montageöffnung (4) des Körpers (3) eingeführt zu werden, und
- eine zweite Baugruppe (6), welche dazu ausgebildet ist, an einer ersten Seite (7) des Bauteils (2) angelegt zu werden,
aufweist, wobei die erste Baugruppe (5) durch ein Zusammenwirken eines Befestigungsmittels (8) mit der ersten Baugruppe (5) und der zweiten Baugruppe (6) gegen eine Innenfläche (9) des Körpers (3) verspreizbar ist, **dadurch gekennzeichnet, dass** die erste Baugruppe (5) dazu ausgebildet ist, an einer der ersten Seite (7) gegenüberliegenden, zweiten Seite (10) des Bauteils (2) angelegt zu werden, wodurch die erste Baugruppe (5) und die zweite Baugruppe (6) zusammen zum Halten des Bauteils (2) ausgebildet sind.

2. Befestigungsvorrichtung (1) nach Anspruch 1, wobei die erste Baugruppe (5) einen Kopf (11) zum Anlegen an das Bauteil (2) aufweist, vorzugsweise wobei der Kopf (11) dazu ausgebildet ist, durch Zusammenwirken mit einer Führungsfläche (12) am Bauteil (2) Rotationen der ersten Baugruppe (5) relativ zum Bauteil (2) im Wesentlichen zu verhindern.

3. Befestigungsvorrichtung (1) nach einem der vorhergehenden Ansprüche, wobei die zweite Baugruppe (6) einen Kopf (11) zum Anlegen an das Bauteil (2) aufweist, vorzugsweise wobei der Kopf (11) dazu ausgebildet ist, durch Zusammenwirken mit einer Führungsfläche (12) am Bauteil (2) Rotationen der zweiten Baugruppe (6) relativ zum Bauteil (2) im Wesentlichen zu verhindern.

4. Befestigungsvorrichtung (1) nach einem der vorhergehenden Ansprüche, wobei die erste Baugruppe (5) und/oder zweite Baugruppe (6) einen Hals (13) aufweist, welcher zum Einführen in wenigstens ein Loch (14), vorzugsweise Langloch, des Bauteils (2) ausgebildet ist.

5. Befestigungsvorrichtung (1) nach einem der vorhergehenden Ansprüche, wobei die erste Baugruppe (5) einen Dübel (15) und/oder wenigstens, vorzugsweise genau, zwei Spreizarme (16) aufweist, vorzugsweise wobei die wenigstens zwei Spreizarme (16) Teil des Dübels (15) sind.

6. Befestigungsvorrichtung (1) nach einem der vorhergehenden Ansprüche, wobei die erste Baugruppe (5) eine Hülse (17) aufweist, vorzugsweise wobei die Hülse (17) ein Innengewinde (18) und/oder wenigstens ein Anschlagelement (19) aufweist.

7. Befestigungsvorrichtung (1) nach einem der vorhergehenden Ansprüche, wobei das Befestigungsmittel (1) eine Schraube (25) mit einem Gewinde (20) ist, vorzugsweise wobei das Gewinde (20) dazu ausgebildet ist, mit dem Innengewinde (18) der Hülse (17) zusammenzuwirken.

8. Befestigungsvorrichtung (1) zur Befestigung eines Bauteils (2) an einem Körper (3) mit wenigstens einer Montageöffnung (4), insbesondere nach einem der vorhergehenden Ansprüche, wobei die Befestigungsvorrichtung (1)
- einen Dübel (15) mit wenigstens, vorzugsweise genau, zwei Spreizarmen (16) und
- eine Hülse (17) mit wenigstens einem abstehenden Fortsatz (21)
umfasst, **dadurch gekennzeichnet, dass** zumindest ein Spreizarm (16) der wenigstens zwei Spreizarme (16) eine Eingriffsausnehmung (22) zur verschieblichen Aufnahme des wenigstens einen Fortsatzes (21) aufweist, wobei die Eingriffsausnehmung (22) wenigstens einen Anschlag (23) aufweist, welcher dazu ausgebildet ist, beim Zusammenwirken des wenigstens einen Fortsatzes (21) mit dem wenigstens einen Anschlag (23) eine Bewegung der Hülse (17) weg vom Dübel (15) zu begrenzen.

9. Befestigungsvorrichtung (1) nach Anspruch 6 oder 8, wobei das wenigstens eine Anschlagelement (19) und/oder der wenigstens eine Fortsatz (21) mit der ersten Baugruppe (5) und/oder dem Dübel (15), vorzugsweise mit den wenigstens zwei Spreizarmen (16), in Eingriff bringbar ist, sodass eine Rotation der Hülse (17) um eine Längsachse (24) der Befestigungsvorrichtung (1) relativ zur ersten Baugruppe (5) und/oder relativ zum Dübel (15), im Wesentlichen blockierbar ist.

10. Befestigungsvorrichtung (1) nach Anspruch 8 oder 9, wobei die Befestigungsvorrichtung (1) eine Schraube (25) mit einem Gewinde (20) aufweist, wobei die Schraube (25) in einer Betriebsstellung der Befestigungsvorrichtung (1) den Dübel (15) und die Hülse (17) durchgreift.

11. Befestigungsvorrichtung (1) nach einem der Ansprüche 5 bis 10, wobei die Hülse (17) ein Innengewinde (18) aufweist, welches dazu ausgebildet ist, mit dem Gewinde (20) der Schraube (25) zusammenzuwirken, sodass die Hülse (17) durch Rotation der Schraube (25) um die Längsachse (24) unter Eingriff des wenigstens einen Anschlagelements (19) und/oder Fortsatzes (21) mit der ersten Baugruppe (5) und/oder dem Dübel (15), vorzugsweise mit den wenigstens zwei Spreizarmen (16), entlang des Gewindes (20) der Schraube (25) verfahrbar ist.

12. Befestigungsvorrichtung (1) nach einem der Ansprüche 5 bis 11, wobei die Hülse (17) wenigstens eine Spreizfläche (26) aufweist, welche dazu ausgebildet ist, bei einer Bewegung der Hülse (17) in Richtung des Dübels (15) die wenigstens zwei Spreizarme (16) auseinander zu spreizen, vorzugsweise wobei sich die wenigstens eine Spreizfläche (26) in der Betriebsstellung der Befestigungsvorrichtung (1) entlang der Längsachse (24) der Befestigungsvorrichtung (1) in Richtung Dübel (15), z.B. konisch, verjüngt.

13. Befestigungsvorrichtung (1) nach einem der vorhergehenden Ansprüche, wobei die Befestigungsvorrichtung (1) eine zentrische Öffnung (27) entlang der Längsachse (24) aufweist, vorzugsweise wobei die Öffnung (27) dazu ausgebildet ist, das Befestigungsmittel (8) und/oder die Schraube (25) drehbar um die Längsachse (24) und/oder unverschieblich quer zur Längsachse (24) zu lagern.

14. Montageeinheit (28) zur Befestigung am Körper (3), wobei die Montageeinheit (28) wenigstens eine Befestigungsvorrichtung (1) nach einem der Ansprüche 1 bis 13 und ein Bauteil (2) mit wenigstens einem Loch (14), vorzugsweise Langloch, aufweist, wobei die Befestigungsvorrichtung (1) in einem Betriebszustand der Montageeinheit (28) durch das wenigstens eine Loch (14) durchgeführt ist, vorzugsweise wobei das Bauteil (2) länglich ist und/oder wobei die beiden Endbereiche des Bauteils (2) jeweils ein Befestigungselement (29) zum, vorzugsweise lösbaren, Aufstecken und/oder Einstecken von Anbauteilen wie z.B. eine Toilettensitzerhöhung aufweisen.

15. Montageeinheit (28) nach Anspruch 14, wobei das wenigstens eine Loch (14) des Bauteils (2)
- wenigstens zwei in eine Längsrichtung (30) des Bauteils (2) ausgerichtete und entlang der Längsrichtung (30) voneinander beabstandete Langlöcher darstellt, welche auf wenigstens zwei Montageöffnungen (4) des Körpers (3) abgestimmt sind, und/oder
- entlang der Längsrichtung (30) in einer Draufsicht entlang der Längsachse (24) der Befestigungsvorrichtung (1) eine Lochbreite (31) aufweist, welche kleiner ist als ein Außendurchmesser (32) der wenigstens zwei Spreizarme (16) in einem unverspreizten Zustand des Befestigungsmittels (1) und/oder der Hülse (17).

16. Anordnung mit einer Montageeinheit (28) nach einem der Ansprüche 14 oder 15 umfassend ein längliches Bauteil (2) mit zwei Löchern (14) und mit an den beiden Endbereichen des Bauteils (2) vorgesehenen Befestigungselementen (29) zum Anbringen eines Toilettendeckels und/oder einer Toilettensitzerhöhung, wobei das Bauteil (2) in Abstimmung der Löcher (14) mit zwei Montageöffnungen (4) der Toilettenschüssel an der Toilettenschüssel im Wesentlichen angelegt ist und je Montageöffnung (4) mittels einer Befestigungsvorrichtung (1) nach einem der Ansprüche 1 bis 13 verspreizt oder verspreizbar ist.

17. Verwendung einer Befestigungsvorrichtung (1) nach einem der Ansprüche 1 bis 13 oder einer Montageeinheit (28) nach einem der Ansprüche 14 oder 15 zur Montage eines Toilettensitzes und/oder einer Toilettensitzerhöhung an einer Toilettenschüssel.
